Europäisches Patentamt

European Patent Office

Office européen des brevets

(19)

(11) **EP 1 093 641 B1**

(12) **EUROPÄISCHE PATENTSCHRIFT**

(45) Veröffentlichungstag und Bekanntmachung des Hinweises auf die Patenterteilung:
**22.05.2002 Patentblatt 2002/21**

(51) Int Cl.[7]: **G06T 17/00**

(86) Internationale Anmeldenummer:
**PCT/EP98/04110**

(21) Anmeldenummer: **98940123.7**

(22) Anmeldetag: **03.07.1998**

(87) Internationale Veröffentlichungsnummer:
**WO 00/02163 (13.01.2000 Gazette 2000/02)**

(54) **VERFAHREN ZUR RECHNERGESTÜTZTEN GENERIERUNG EINER MASCHINE MIT GEOMETRISCH BESTIMMTEN, SPHÄRISCHEN BAUTEILEN**

METHOD FOR THE COMPUTER-ASSISTED PRODUCTION OF A MACHINE WITH GEOMETRICALLY-PREDETERMINED SPHERICAL COMPONENTS

PROCEDE POUR PRODUIRE DE MANIERE ASSISTEE PAR ORDINATEUR UNE MACHINE PRESENTANT DES COMPOSANTS SPHERIQUES A GEOMETRIE DETERMINEE

(84) Benannte Vertragsstaaten:
**CH FR GB IT LI NL**

(43) Veröffentlichungstag der Anmeldung:
**25.04.2001 Patentblatt 2001/17**

(73) Patentinhaber: **TBO Treuhandbüro Dr. Ottiker + Partner AG**
**8036 Zürich (CH)**

(72) Erfinder: **RANOLD, Michael**
**D-69239 Neckarsteinach-Grein (DE)**

(74) Vertreter: **Schuster, Gregor, Dipl.-Ing. et al**
**Patentanwälte**
**Schuster & Partner**
**Wiederholdstrasse 10**
**70174 Stuttgart (DE)**

(56) Entgegenhaltungen:
EP-A- 0 389 890    EP-A- 0 898 247
WO-A-95/00916    US-A- 5 511 414

- **DUTTA D ET AL: "Cyclides in surface and solid modeling" IEEE COMPUTER GRAPHICS AND APPLICATIONS, JAN. 1993, USA, Bd. 13, Nr. 1, Seiten 53-59, XP002098389 ISSN 0272-1716**
- **BRANDNER, G.: "DREH- UND SCHRAUBENFLAECHEN ALS MOEGLICHE WALELZ-TEIL- UND FLAKENFLAECHEN RAEUMLICHER VERZAHNUNGEN. " MASCHINENBAUTECHNIK.BERLIN 32, Nr. 12, 1983, Seiten 559-563, XP002098390**

## EP 1 093 641 B1

**Beschreibung**

Die Erfindung geht aus von einem Verfahren zur rechnergestützten Generierung einer Maschine mit geometrisch bestimmten, sphärischen Bauteilen, nach der Gattung des Hauptanspruchs.

Die Druckschrift US-A-5 511 414 beschreibt ein Verfahren zur Simulation und Berechnung der Bedingungen des Ineinandergreifens von Zahnrädern während der Rotation unter Verwendung eines 3D-CAD-Systems. Die Zahnraddaten werden hierbei über Messwerte oder Berechnungen ins System eingegeben.

Bekannt sind Verfahren und Vorrichtungen zur rechnergestützten Konstruktion von Maschinen (Kolbenmaschinen, Verdichter, Pumpen odgl.), die dem Ingenieur ermöglichen eine bestehende Konstruktion virtuell auf ihre Eigenschaften hin zu untersuchen. Ziel einer solchen Untersuchung ist die Optimierung der Maschinen entsprechend den an die Konstruktion gestellten Anforderungen. Dabei sind der Optimierung Grenzen gesetzt durch das zugrundegelegte Wirkprinzip (Kolbenmaschine, Schraubenkompressor, Wankelverdichter, Zahnradpumpe etc.). Entspricht die optimierte Auslegung der generierten Maschine nicht den Anforderungen, bleibt es der Kreativität des Ingenieurs überlassen, unterstützt durch Konstruktions-, Visualisierungs- und Animationsverfahren, eine neue konstruktive Lösung zu generieren. Hierbei hat er die Wahl einerseits zwischen nach unterschiedlichen Wirkprinzipien arbeitenden Maschinen (z.B. Kolbenmaschine oder Strömungsmaschine) und andererseits zur Festlegung der Parameter einer konstruktiven Ausgestaltung der Maschine in den Grenzen des jeweiligen Wirkprinzips (z.B. Hubbegrenzung bei Kolbenmaschinen). Der Aufbau der bestehenden Verfahren zur rechnergestützten Generierung von Maschinen setzt jedoch voraus, daß der Anwender bereits eine Vorstellung der Geometrie der zu generierenden Bauteile einer Maschine hat. Eine räumliche Erfassung und präzise Darstellung beispielsweise von winkelachsigen und geschrägtachsigen Rotations-kolbenmaschinen wird von den bisher bekannten Verfahren (CAD CAE) nicht unterstützt.

Demgegenüber hat das erfindungsgemäße Verfahren nach Anspruch 1 den Vorteil, daß die Darstellung und komplette räumliche Erfassung der Maschinen mit geometrisch bestimmten, sphärischen Bauteilpaaren und des räumlichen Eingriffes ihrer Bauteile ineinander ermöglicht wird. Hierbei gibt der Benutzer eine Reihe von konstant vorgegebenen und variabel festgelegten Parametern vor und erhält die geometrischen Konstruktionsdaten für eine Maschine mit einem aufeinander abgestimmten Bauteilpaar dessen beide Bauteile W und B räumlich ineinandergreifen und oszillierende Arbeitsräume bilden.

Nach einer vorteilhaften Ausgestaltung der Erfindung werden die Koordinaten der gewölbten Flächen der Bauteile W und B durch Variation des Kugelradius R auf mehreren verschiedenen Kugelschalen bestimmt, wodurch man die komplexen, sphärischen Flächen der Bauteile W und B über eine Punktwolke definiert.

Nach einer weiteren vorteilhaften Ausgestaltung der Erfindung wird jede Kugelschale bezüglich der vorhergehenden Kugelschale um einen Drehwinkel $\delta$ verdreht. Dabei erhält man spiralförmige, sphärische Oberflächengeometien der Bauteile B und W.

Nach einer weiteren vorteilhaften Ausgestaltung der Erfindung sind die Koordinatensysteme zur Berechnung und Beschreibung der gewölbten Flächen der Bauteile B und W rechtshändige, kartesische Koordinatensysteme.

Nach einer weiteren vorteilhaften Ausgestaltung der Erfindung werden die berechneten Werte der Oberflächengeometrie von Bauteil B und Bauteil W zur Steuerung einer Werkzeugmaschine verwendet. Der Ingenieur hat dabei die Möglichkeit eine größere Anzahl von Variationen der zu generierenden Maschine virtuell auf ihre Eigenschaften hin zu untersuchen und den an die Maschine gestellten Anforderungen entsprechend zu optimieren, bevor die endgültige Form der Maschine festlegbar ist. Die dabei erhaltenen Konstruktionsparameter können direkt zur Steuerung einer Werkzeugmaschine weiterverwendet werden.

Nach einer weiteren vorteilhaften Ausgestaltung der Erfindung wird das Verfahren zur systematischen Klassifizierung von Maschinen mit geometrisch bestimmten, sphärischen Bauteilpaaren verwendet. Dabei werden Maschinen mit ähnlichen Parametern und Eigenschaften zu Gruppen und Klassen zusammengefaßt. Eine solche Klassifizierung erleichtert nicht nur das Auffinden schon berechneter Maschinen sondern kann auch Hinweise für die Festlegung von Parametern einer zu generierenden Maschine liefern.

Weitere Vorteile und vorteilhafte Ausgestaltungen der Erfindung sind der nachfolgenden Beispielsbeschreibung, der Zeichnung und den Ansprüchen entnehmbar.

Mehrere Modellbeispiele und ein Ausführungsbeispiel des Gegenstands der Erfindung sind in der Zeichnung dargestellt und im folgenden näher beschrieben. Es zeigen:

Fig. 1     Beispiel für ein einfaches Modell,

Fig. 2     Beispiel für ein Modell mit variablem Abwälzradius r,

Fig. 3     Beispiel für ein Modell mit variablem Erhebungswinkel $\gamma$,

Fig. 4     Beispiel für ein verdrehtes Modell,

Fig. 5    Beispiel für eine Maschine mit geometrisch bestimmten sphärischen Bauteilen, und

Fig. 6    Schematische Darstellung der Abwälzung des Schnittkreises auf der Kugel

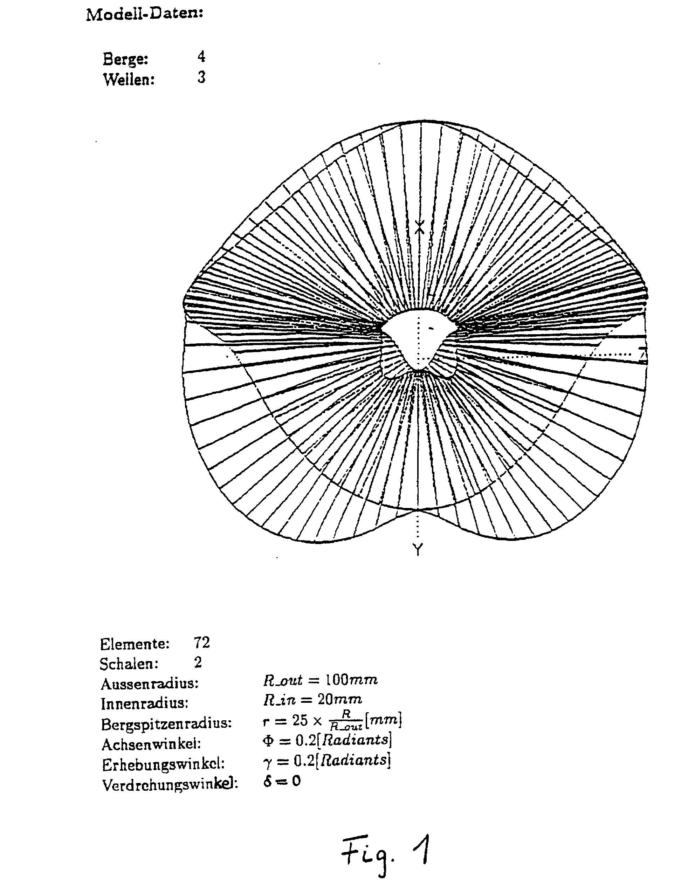

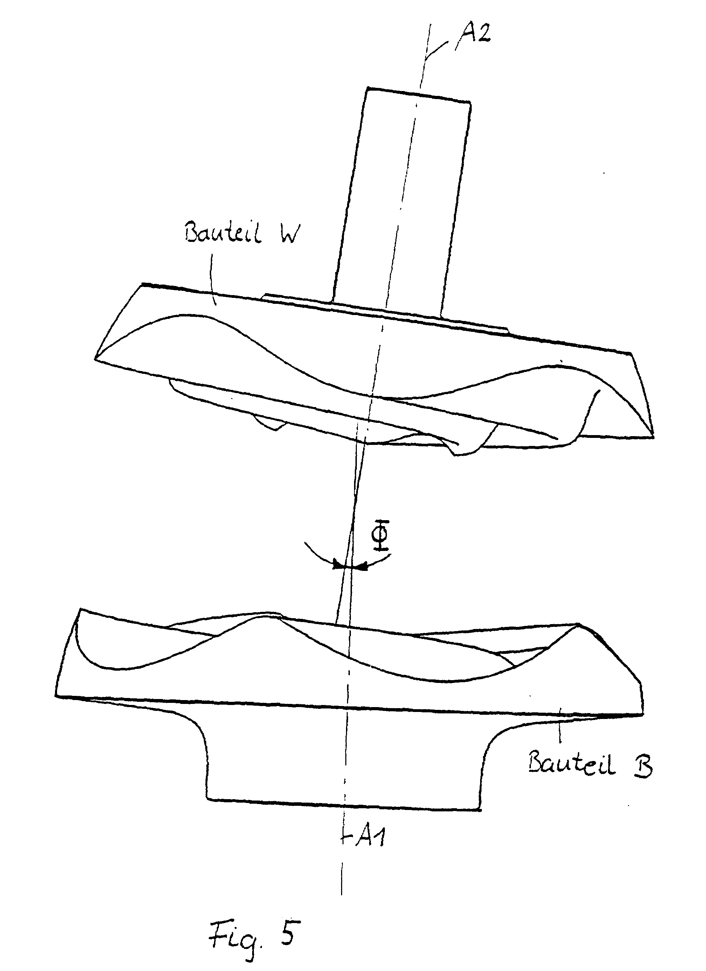

Den in Figur 1 bis 4 dargestellten Modellen liegt allen die folgende Modellrechnung zugrunde, bei Variation der variabel vorgegebenen Parameter. Fig. 5 zeigt ein nach dem erfindungsgemäßen Verfahren generiertes Bauteilpaar einer Maschine mit geometrisch bestimmten sphärischen Bauteilen.

Mathematische Modellrechnung

Die folgenden Parameter können variabel vogegeben werden:

Anzahl der Erhebungen von Bauteil B:      zb
Anzahl der Vertiefungen von Bauteil W:    zw = zb -1
Drehwinkel von Bauteil B:                 $\Theta$
Drehwinkel von Bauteil W:                 $\eta$
Achsenwinkel zwischen A1 und A2:          $\Phi$
Erhebungswinkel:                          $\gamma$
Abwälzradius:                             r
Kugelradius:                              R
Verdrehwinkel:                            $\delta$

Berechnung der Konstruktionsvorschrift für das Bauteil W:

Ausgangsgleichung (1) beschreibt die Koordinaten eines auf der Oberfläche einer Kugel mit Radius R liegenden Schnittkreises als Ausgangselement K wobei der Kreismittelpunkt des Schnittkreises mit dem Ursprung des Koordinatensystems der Gleichung (1) übereinstimmt. In der x-z-Ebene mit dem Winkel $\alpha$ zur x-Achse ist:

$$\vec{r} = r \times \begin{pmatrix} \cos \alpha \\ 0 \\ \sin \alpha \end{pmatrix} \qquad (1)$$

Der Ursprung des Schnittkreis-Koordinatensystems wird in den Mittelpunkt der Kugel verschoben (Verschiebungsvektor V):

$$V = \sqrt{R^2 - r^2} \qquad (2)$$

$$\vec{r} = \begin{pmatrix} r \times \cos \alpha \\ V \\ r \times \sin \alpha \end{pmatrix} \qquad (3)$$

Ein Verdrehen in ein körperfestes W-Koordinatensystem um die z-Achse wird zunächst durchgeführt:

$$\vec{r} = \begin{pmatrix} \cos \gamma & \sin \gamma & 0 \\ -\sin \gamma & \cos \gamma & 0 \\ 0 & 0 & 1 \end{pmatrix} \times \begin{pmatrix} r \times \cos \alpha \\ V \\ r \times \sin \alpha \end{pmatrix} \qquad (4)$$

$$\vec{r} = \begin{pmatrix} r \times \cos\gamma \times \cos\alpha - V \times \sin\gamma \\ -r \times \sin\gamma \times \cos\alpha - V \times \cos\gamma \\ r \times \sin\alpha \end{pmatrix} \qquad (5)$$

und danach eine Drehung um die x-Achse mit dem Drehwinkel $\Theta$, in mathematisch positiver Richtung:

$$\vec{r} = \begin{pmatrix} 1 & 0 & 0 \\ 0 & \cos\Theta & \sin\Theta \\ 0 & -\sin\Theta & \cos\Theta \end{pmatrix} \times \begin{pmatrix} r \times \cos\gamma \times \cos\alpha + V \times \sin\gamma \\ -r \times \sin\gamma \times \cos\alpha + V \times \cos\gamma \\ r \times \sin\alpha \end{pmatrix} \qquad (6)$$

$$\vec{r} = \begin{pmatrix} r \times \cos\gamma \times \cos\alpha + V \times \sin\gamma \\ \cos\Theta \times (-r \times \sin\gamma \times \cos\alpha + V \times \cos\gamma) + r \times \sin\Theta \times \sin\alpha \\ -\sin\Theta \times (-r \times \sin\gamma \times \cos\alpha + V \times \cos\gamma) + r \times \cos\Theta \times \sin\alpha \end{pmatrix} \qquad (7)$$

Eine sich daran anschließende Drehung um die z-Achse mit dem Drehwinkel $\Phi$, in mathematisch positiver Richtung ergibt:

$$\vec{r} = \begin{pmatrix} \cos\Phi & -\sin\Phi & 0 \\ \sin\Phi & \cos\Phi & 0 \\ 0 & 0 & 1 \end{pmatrix}$$

$$\times \begin{pmatrix} r \times \cos\gamma \times \cos\alpha + V \times \sin\gamma \\ \cos\Theta \times (-r \times \sin\gamma \times \cos\alpha + V \times \cos\gamma) + r \times \sin\Theta \times \sin\alpha \\ -\sin\Theta \times (-r \times \sin\gamma \times \cos\alpha + V \times \cos\gamma) + r \times \cos\Theta \times \sin\alpha \end{pmatrix} \qquad (8)$$

$$= \begin{pmatrix} \cos\Phi \times [r \times \cos\gamma \times \cos\alpha + V \times \sin\gamma] \\ - \sin\Phi \times [\cos\Theta \times (-r \times \sin\gamma \times \cos\alpha + V \times \cos\gamma) + r \times \sin\Theta \times \sin\alpha] \\ \\ \sin\Phi \times [r \times \cos\gamma \times \cos\alpha + V \times \sin\gamma] \\ + \cos\Phi \times [\cos\Theta \times (-r \times \sin\gamma \times \cos\alpha + V \times \cos\gamma) + r \times \sin\Theta \times \sin\alpha] \\ \\ -\sin\Theta \times (-r \times \sin\gamma \times \cos\alpha + V \times \cos\gamma) + r \times \cos\Theta \times \sin\alpha \end{pmatrix} \qquad (9)$$

Durch eine Drehung um die x-Achse mit dem Animationswinkel $\eta$, in mathematisch negativer Richtung erhält man die Koordinaten der Abwicklung des Schnittkreises K in dem körperfesten W-Koordinaiensystem:

$$\vec{r} = \begin{pmatrix} 1 & 0 & 0 \\ 0 & \cos\eta & -\sin\eta \\ 0 & \sin\eta & \cos\eta \end{pmatrix}$$

$$\times \left( \begin{array}{l} \cos\Phi \times [\quad r \times \cos\gamma \times \cos\alpha + V \times \sin\gamma] \\ -\sin\Phi \times [\quad \cos\Theta \times (-r \times \sin\gamma \times \cos\alpha + V \times \cos\gamma) \\ \qquad + r \times \sin\Theta \times \sin\alpha] \\ \\ \sin\Phi \times [\quad r \times \cos\gamma \times \cos\alpha + V \times \sin\gamma] \\ +\cos\Phi \times [\quad \cos\Theta \times (-r \times \sin\gamma \times \cos\alpha + V \times \cos\gamma) \\ \qquad + r \times \sin\Theta \times \sin\alpha] \\ \\ -\sin\Theta \times (-r \times \sin\gamma \times \cos\alpha + V \times \cos\gamma) + r \times \cos\Theta \times \sin\alpha \end{array} \right) \quad (10)$$

$$= \left( \begin{array}{l} \cos\Phi \times [\quad r \times \cos\gamma \times \cos\alpha + V \times \sin\gamma] \\ -\sin\Phi \times [\quad \cos\Theta \times (-r \times \sin\gamma \times \cos\alpha + V \times \cos\gamma) \\ \qquad + r \times \sin\Theta \times \sin\alpha] \\ \\ \cos\eta \times \{\quad \sin\Phi \times [\quad r \times \cos\gamma \times \cos\alpha + V \times \sin\gamma] \\ \qquad + \cos\Phi \times [\quad \cos\Theta \times (-r \times \sin\gamma \times \cos\alpha + V \times \cos\gamma) \\ \qquad\qquad + r \times \sin\Theta \times \sin\alpha] \} \\ -\sin\eta \times \{\quad -\sin\Theta \times (-r \times \sin\gamma \times \cos\alpha + V \times \cos\gamma) \\ \qquad\qquad + r \times \cos\Theta \times \sin\alpha \} \\ \\ \sin\eta \times \{\quad \sin\Phi \times [\quad r \times \cos\gamma \times \cos\alpha + V \times \sin\gamma] \\ \qquad + \cos\Phi \times [\quad \cos\Theta \times (-r \times \sin\gamma \times \cos\alpha + V \times \cos\gamma) \\ \qquad\qquad + r \times \sin\Theta \times \sin\alpha] \} \\ +\cos\eta \times \{\quad -\sin\Theta \times (-r \times \sin\gamma \times \cos\alpha + V \times \cos\gamma) \\ \qquad\qquad \div r \times \cos\Theta \times \sin\alpha \} \end{array} \right) \quad (11)$$

Für die Gleichung (11) wird der Winkel $\alpha$ berechnet. Für die Tangente der Kreismittelpunktsabwicklung (Schnittkreis K) wird ein Vektor zwischen einem Mittelpunkt vor und einem Mittelpunkt nach dem aktuellen Kreismittelpunkt gebildet. Auf diesem Vektor soll der Vektor vom Kreismittelpunkt zu einem Kreispunkt senkrecht stehen. Über das Vektorprodukt erhält man Gleichung (12)

$$A \times \tan\alpha + B = 0 \quad (12)$$

mit

$\Theta P = \Theta$ des nächsten Kreismittelpunktes
$\Theta M = \Theta$ des vorhergehenden Kreismittelpunktes
$\eta P = \eta$ des nächsten Kreismittelpunktes
$\eta M = \eta$ des vorhergehenden Kreismittelpunktes
und

$$A = (\cos\Theta F - \cos\Theta M) \times \sin^2\Phi \times \cos\gamma \times \sin\Theta$$
$$+ (\cos\eta \times \cos\Phi \times \sin\Theta - \sin\eta \times \cos\Theta) \times$$
$$[\quad (\cos\eta P - \cos\eta M) \times \sin\Phi \times \sin\gamma$$
$$+ (\cos\eta P \times \cos\Theta F - \cos\eta M \times \cos\Theta M) \times \cos\Phi \times \cos\gamma$$
$$+ (\sin\eta P \times \sin\Theta P - \sin\eta M \times \sin\Theta M) \times \cos\gamma]$$
$$+ (\sin\eta \times \cos\Phi \times \sin\Theta + \cos\eta \times \cos\Theta) \times$$
$$[\quad (\sin\eta P - \sin\eta M) \times \sin\Phi \times \sin\gamma$$
$$+ (\sin\eta P \times \cos\Theta F - \sin\eta M \times \cos\Theta M) \times \cos\Phi \times \cos\gamma$$
$$+ (\cos\eta M \times \sin\Theta M - \cos\eta P \times \sin\Theta P) \times \cos\gamma] \tag{13}$$

$$B = (\cos\Theta M - \cos\Theta P) \times$$
$$[\quad \sin\Phi \times \cos\Phi \times \cos^2\gamma$$
$$+ \sin^2\Phi \times \sin\gamma \times \cos\gamma \times \cos\Theta]$$
$$+ [\cos\eta \times$$
$$(\sin\Phi \times \cos\gamma - \cos\Phi \times \cos\Theta \times \sin\gamma)$$
$$- \sin\eta \times \sin\Theta \times \sin\gamma] \times$$
$$[\quad (\cos\eta P - \cos\eta M) \times \sin\Phi \times \sin\gamma$$
$$+ (\cos\eta P \times \cos\Theta P - \cos\eta M \times \cos\Theta M) \times \cos\Phi \times \cos\gamma$$
$$+ (\sin\eta P \times \sin\Theta P - \sin\eta M \times \sin\Theta M) \times \cos\gamma]$$
$$+ [\sin\eta \times$$
$$(\sin\Phi \times \cos\gamma - \cos\Phi \times \cos\Theta \times \sin\gamma)$$
$$\cos\eta \times \sin\Theta \times \sin\gamma] \times$$
$$[\quad (\sin\eta P - \sin\eta M) \times \sin\Phi \times \sin\gamma$$
$$+ (\sin\eta P \times \cos\Theta P - \sin\eta M \times \cos\Theta M) \times \cos\Phi \times \cos\gamma$$
$$+ (\cos\eta M \times \sin\Theta M - \cos\eta P \times \sin\Theta P) \times \cos\gamma] \tag{14}$$

wobei

$$\alpha = \arctan(-\frac{B}{A}) \tag{15}$$

Um zu den Konstruktionskoordinaten von Bauteil W zu kommen, wird der Winkel $\alpha$ für $\Theta$ von Null bis 360 Grad berechnet und in Gleichung (11) mit dem entsprechenden $\Theta$ eingesetzt.

Konstruktionsvorschrift für das Bauteil B:

Das Bauteil B erhält man, indem man die Freigängigkeit von Bauteil W gewährleistet. Dies ist durch Rücktransformation der erhaltenen Punkte von Bauteil W in ein körperfestes B-Koordinatensystem möglich. Es werden Bauteile W und B so verdreht, daß alle Punkte in der Projektion auf die y-z-Ebene des körperfesten B-Koordinatensystems den selben Winkel um die y- bzw. z-Achse einnehmen. Der Punkt mit dem kleinsten x-Wert ist ein Element der Hüllkurve (Bauteil B). Es werden die einzelnen Punkte von Bauteil W zurücktransformiert mit

$$\vec{PB} = \begin{pmatrix} \cos\Phi & \sin\Phi \times \cos\eta & \sin\Phi \times \sin\eta \\ -\cos\Theta \times \sin\Phi & \begin{array}{l}\cos\Theta \times \cos\eta \\ \times \cos\Phi \\ + \sin\Theta \times \sin\eta\end{array} & \begin{array}{l}\cos\Theta \times \sin\eta \\ \times \cos\Phi \\ - \sin\Theta \times \cos\eta\end{array} \\ -\sin\Theta \times \sin\Phi & \begin{array}{l}- \cos\Theta \times \sin\eta \\ + \sin\Theta \times \cos\eta \\ \times \cos\Phi\end{array} & \begin{array}{l}\cos\Theta \times \cos\eta \\ + \sin\Theta \times \sin\eta \\ \times \cos\Phi\end{array} \end{pmatrix} \quad (16)$$

$$\times \; \vec{PW}$$

Fig. 1 bis 4 in Beispiele für geometrisch bestimmte, sphärische Bauteilpaare nach der oben dargestellten Modellrechnung dargestellt. In Fig. 1 ist ein einfaches Modell mit folgenden Parametern dargestellt:

| | |
|---|---|
| Berge: | 4 |
| Wellen: | 3 |
| Elemente: | 72 |
| Schalen: | 2 |
| Aussenradius: | $R\_out = 100mm$ |
| Innenradius: | $R\_in = 20mm$ |
| Bergspitzenradius: | $r = 25 \times \dfrac{R}{R\_out}[mm]$ |
| Achsenwinkel: | $\Phi = 0.2[Radiants]$ |
| Erhebungswinkel: | $\gamma = 0.2[Radiants]$ |
| Verdrehungswinkel: | $\delta = 0$ |

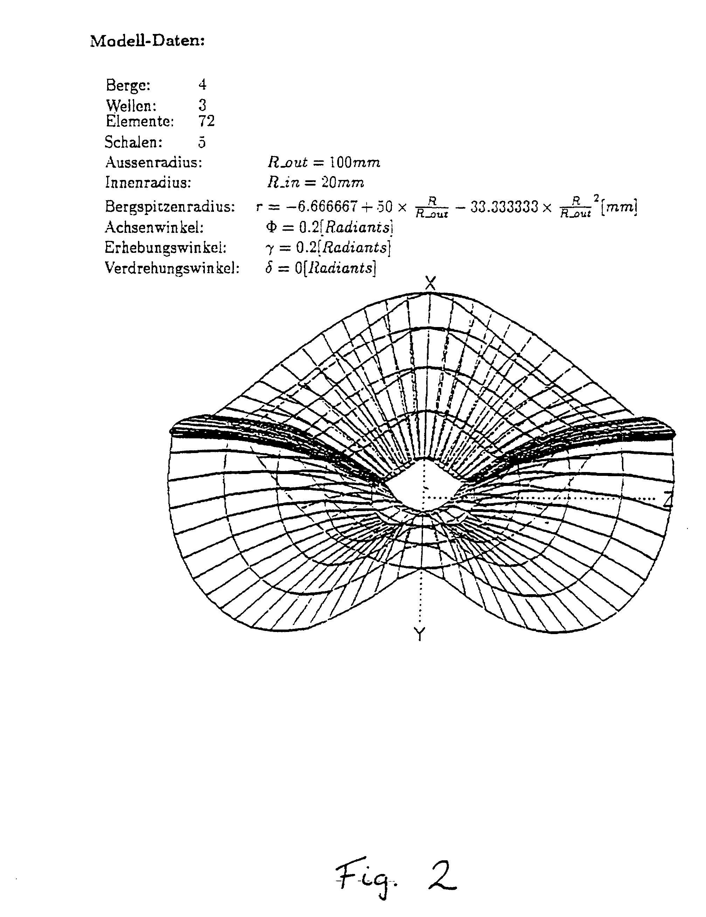

Fig. 2 zeigt ein Beispiel für ein Modell mit variablem Abwälzradius r und wurde mit den folgenden Parametern berechnet:

| | |
|---|---|
| Berge: | 4 |
| Wellen: | 3 |
| Elemente: | 72 |
| Schalen: | 5 |
| Aussenradius: | $R\_out = 100mm$ |
| Innenradius: | $R\_in = 20mm$ |
| Bergspitzenradius: | $r = -6.666667 - 50 \times \dfrac{R}{R\_out} - 33.333333 \times \dfrac{R}{R\_out}^2[mm]$ |
| Achsenwinkel: | $\Phi = 0.2[Radiants]$ |
| Erhebungswinkel: | $\gamma = 0.2\ [Radiants]$ |
| Verdrehungswinkel: | $\delta = 0[Radiants]$ |

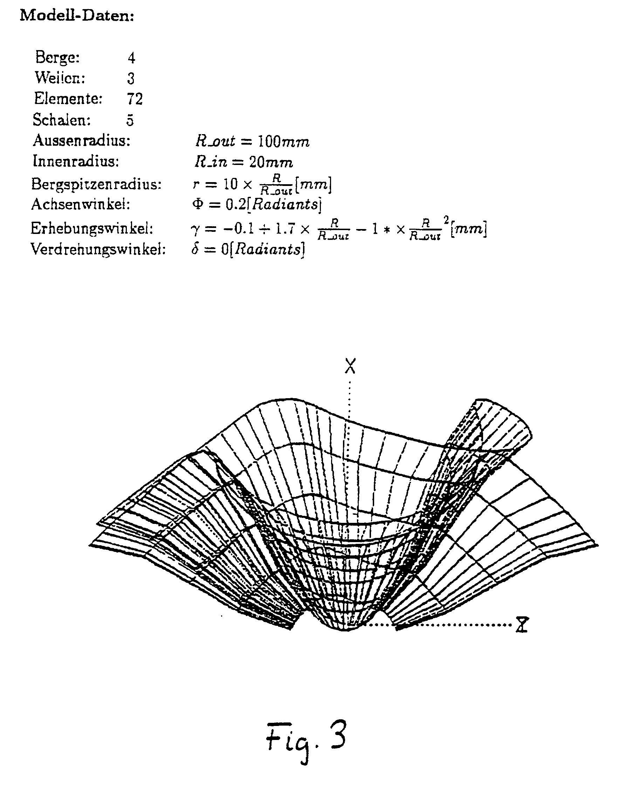

Beim dem Modell in Fig. 3 wurde der Erhebungswinkel γ variiert und es wurden die folgenden Parameterwerte verwendet:

| | |
|---|---|
| Berge: | 4 |
| Wellen: | 3 |
| Elemente: | 72 |
| Schalen: | 5 |
| Aussenradius: | $R\_out = 100mm$ |
| Innenradius: | $R\_in = 20mm$ |
| Bergspitzenradius: | $r = 10 \times \dfrac{R}{R\_out}[mm]$ |
| Achsenwinkel: | $\Phi = 0.2[Radiants]$ |
| Erhebungswinkel: | $\gamma = -0.1 + 1.7 \times \dfrac{R}{R\_out} - 1 * \times \dfrac{R}{R\_out}^2[mm]$ |
| Verdrehungswinkel: | $\delta = 0[Radiants]$ |

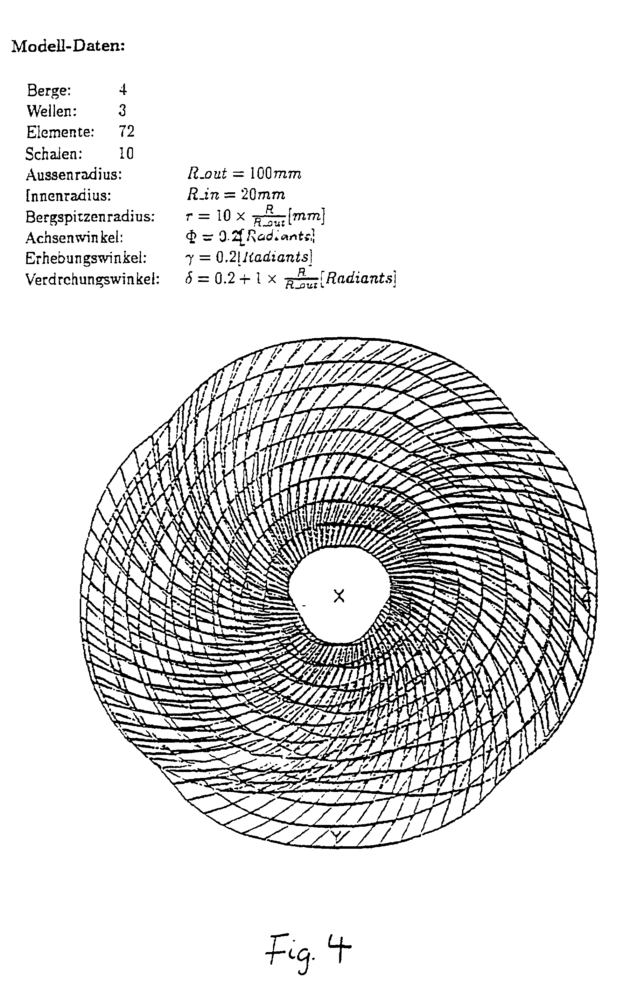

Fig. 4 zeigt ein Modell mit dem Verdrehungswinkel ungleich Null wodurch die Erhebungen und Vertiefungen von Bauteil B bzw. Bauteil W spiralförmig sind. Es wurden hierbei folgende Parameter verwendet:

| | |
|---|---|
| Berge: | 4 |
| Wellen: | 3 |
| Elemente: | 72 |
| Schalen: | 10 |
| Aussenradius: | $R\_out = 100mm$ |
| Innenradius: | $R\_in = 20mm$ |
| Bergspitzenradius: | $r = 10 \times \dfrac{R}{R\_out}[mm]$ |
| Achsenwinkel: | $\Phi = 0.2[Radiants]$ |
| Erhebungswinkel: | $\gamma = 0.2[Radiants]$ |
| Verdrehungswinkel: | $\delta = 0.2 + 1 \times \dfrac{R}{R\_out}[Radiants]$ |

Die in Fig. 5 gezeigten Bauteile B und W weisen spiralförmige Erhebungen bzw. Vertiefungen auf. Zwischen den Achsen A2 und A1, welche Rotationsachsen von Bauteil W und Bauteil B sind, besteht ein Achsenverhältnis Φ.

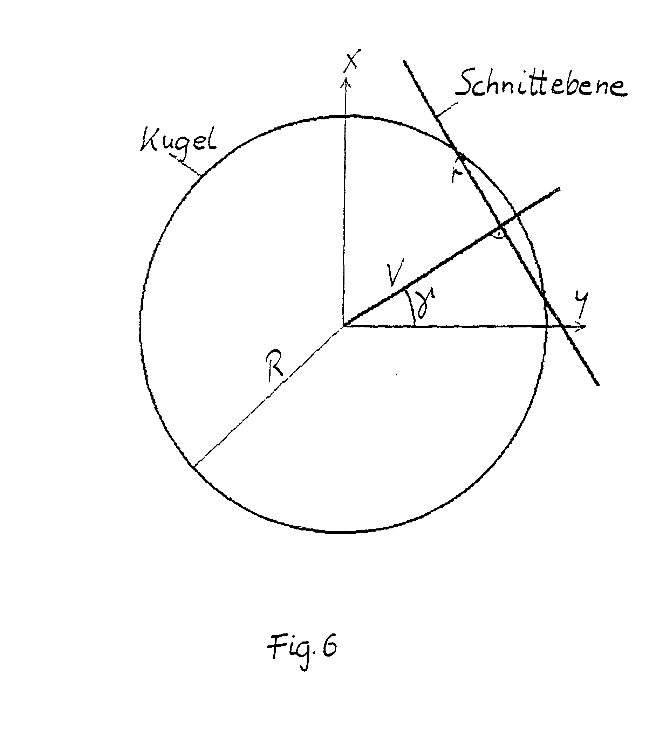

In Fig. 6 ist die Abwälzung des in der Schnittebene der Kugel liegenden Schnittkreises mit dem Abwälzradius r schematisch dargestellt. V ist der Verschiebungsvektor der Verschiebung des Koordinatensystemursprungs von dem Mittelpunkt des Schnittkreises in den Mittelpunkt der Kugel mit dem Radius R. Zwischen dem Verschiebungsvektor V und der y-Achse des Koordinatensystems ist der Erhebungswinkel γ.

Alle in der Beschreibung, den nachfolgenden Ansprüchen und der Zeichnung dargestellten Merkmale können sowohl einzeln als auch in beliebiger Kombination miteinander erfindungswesentlich sein.

**Patentansprüche**

1. Verfahren zur rechnergestützten Generierung einer Maschine mit geometrisch bestimmten, sphärischen Bauteilpaaren

   - mit einem Vertiefungen aufweisenden Bauteil W und einem Erhebungen aufweisenden Bauteil B, wobei das Bauteil W ein körperfestes W-Koordinatensystem aufweist und eine Achse des W-Koordinatensystems mit einer Rotationsachse A2 von Bauteil W zusammenfällt und wobei das Bauteil B ein körperfestes B-Koordinatensystem und eine Achse des B-Koordinatensystems mit einer Rotationsachse A1 von Bauteil B zusammenfällt,
   - mit einem konstanten Achsenwinkel Φ zwischen den Rotationsachsen A1 und A2,
   - mit einer festen Anzahl von Erhebungen zb des Bauteils B und einer festen Anzahl von Vertiefungen zw des Bauteiles W, wobei die Anzahl der Vertiefungen zw um eins größer oder kleiner ist als die Anzahl der Erhebungen zb,
   - mit einem vorgegebenen Drehwinkel Θ von Bauteil B und einem vorgegebenem Drehwinkel η von Bauteil W zwischen welchen ein Drehwinkelverhältnis i (i = η/Θ = zb/zw) besteht und
   - mit einem Kugelschalenmodell zur mathematischen Geometriebeschreibung der durch die Vertiefungen und Erhebungen von Bauteil W bzw. von Bauteil B entstehenden gewölbten Flächen, bestehend aus mindestens einer Kugel mit dem Radius R, und einem Ausgangselement K, vorzugsweise einem Schnittkreis der Kugel mit einem Radius r,

   **gekennzeichnet durch** folgende Verfahrensschritte:

   a) Berechnung der Koordinaten der an der Kugel liegenden Punkte des Ausgangselementes K (Schnittkreises) in einem ersten, zum Ausgangselement K ortsfesten Koordinatensystem;

   b) Berechnung der Koordinaten des Ausgangselementes K (Schnittkreises) in dem W-Koordinatensystem **durch** mindestens eine Transformation des ortsfesten Koordinatensystems des Ausgangselementes K;

   c) Abwälzen des Ausgangselementes K (Schnittkreises) auf der Kugeloberfläche um die komplexe Geometrie von Bauteil W in dem W-Koordinatensystem zu bestimmen;

   d) Rücktransformation der erhaltenen Punkte von Bauteil W in das B-Koordinatensystem **durch** gleichzeitige Drehung der Bauteile B und W, um eine Hüllkurve der Punkte mit den kleinsten Erhebungswerten über einer Ebene des B-Koordinatensystems zu bestimmen, **durch** welche die gewölbte Fläche von Bauteil B definiert ist.

2. Verfahren nach Anspruch 1, **dadurch gekennzeichnet, daß** durch Variation des Kugelradius R mehrere Kugelschalen (Koordinaten) für die komplexe Geometrie (gewölbte Flächen) von Bauteil W und Bauteil B berechnet werden.

3. Verfahren nach Anspruch 2, **dadurch gekennzeichnet, daß** jede Kugelschale mit Radius R durch einen Verdrehwinkel δ um die Al-Rotationsachse bezüglich der vorherigen Kugelschale verdreht ist.

4. Verfahren nach einem der vorherigen Ansprüche, **dadurch gekennzeichnet, daß** das Ausgangselement- Koordinatensystem, das W-Koordinatensystem und das B-Koordinatensystem rechtsorientierte kartesische Koordinatensysteme sind.

5. Verfahren nach einem der vorherigen Ansprüche, **dadurch gekennzeichnet, daß** die Transformation vom Ausgangselement-Koordinatensystem zum achsfesten W-Koordinatensystem zur Berechnung der Koordinaten der Abwicklung des Ausgangselementes K (Schnittkreis) auf der Kugeloberfläche aus einer Vielzahl von Einzeltransformationen zwischen karthesischen Koordinatensystemen besteht.

6. Verfahren nach Anspruch 5, **dadurch gekennzeichnet, daß** die erste Transformation eine Verschiebung des Koordinatensystem-Ursprungs vom Mittelpunkt des Ausgangselementes K (Schnittkreises) in den Mittelpunkt der Kugel ist.

7. Verfahren nach einem der vorherigen Ansprüche, **dadurch gekennzeichnet, daß** alle Transformationen außer der ersten Transformation Rotationen um eine Achse sind.

8. Verfahren nach einem der vorherigen Ansprüche, **dadurch gekennzeichnet, daß** das Ausgangselement K ein Schnittkreis der Kugel ist, und daß im Verfahrensschritt c) ein Vektor (Tangentenvektor) zwischen einem Mittelpunkt vor und einem Mittelpunkt nach dem aktuellen Mittelpunkt des sich abwälzenden Schnittkreises K gebildet wird, welcher senkrecht (90°) auf einem Vektor (Alphavektor) zwischen Kreismittelpunkt und Berührpunkt des Schnittkreises K steht.

9. Verfahren nach einem der vorherigen Ansprüche, **dadurch gekennzeichnet, daß** die berechneten Werte der Oberflächengeometrie von Bauteil B und Bauteil W zur Steuerung einer Werkzeugmaschine verwendet werden.

10. Verfahren nach einem der Ansprüche 1 bis 9, **dadurch gekennzeichnet, daß** das Verfahren zur systematischen Optimierung und Klassifizierung von Maschinen mit geometrisch bestimmten, sphärischen Bauteilpaaren verwendbar ist.

**Claims**

1. Method for the computer-assisted production of a machine with geometrically-predetermined spherical component pairs

   - with a component W having indentations and a component B having elevations, whereby component W has a body W-coordinate system and one axis of the W-coordinate system coincides with a rotational axis A2 of component W and whereby component B has a body B-coordinate system and one axis of the B-coordinate system coincides with a rotational axis A1 of component B,
   - with a constant axis angle φ between the rotational axes A1 and A2,
   - with a fixed number of elevations zb of component B and a fixed number of indentations zw of component W, whereby the number of indentations zw is one greater or less than the number of elevations zb,
   - with a prescribed angle of rotation θ of component B and a prescribed angle of rotation η of component W between which there exists an angle of rotation ratio i (i = η/θ = zb/zw), and
   - with a spherical shell model for the mathematical geometrical description of the dished surfaces arising through the indentations and elevations of component W and of component B, consisting of at least one sphere of radius R and a starting element K, preferably an intersection circle of the sphere with radius r,

   **characterised by** the following steps:

a) computation of the coordinates of the points of starting element K (intersection circle) adjacent to the sphere in a first coordinate system fixed in relation to the starting element K;

b) computation of the coordinates of starting element K (intersection circle) in the W-coordinate system through at least one transformation of the fixed coordinate system of starting element K;

c) rolling of starting element K (intersection circle) in respect of the spherical surface in order to determine the complex geometry of component W in the W-coordinate system;

d) reverse transformation of the obtained points of component W into the B-coordinate system through the simultaneous rotation of components B and W in order to determine an envelope curve of the points with the smallest elevation values above a plane of the B-coordinate system through which the dished surface of component B is defined.

2. Method according to claim 1, **characterised in that** several spherical shells (coordinates) for the complex geometry (dished surfaces) of component W and component B are computed by varying the radius R of the sphere.

3. Method according to claim 2, **characterised in that** each spherical shell with radius R is pivoted around rotational axis A1 by an angle of rotation $\delta$ in relation to the previous spherical shell.

4. Method according to one of the previous claims, **characterised in that** the starting element coordinate system, the W-coordinate system and the B-coordinate system are right-oriented Cartesian coordinate systems.

5. Method according to one of the previous claims, **characterised in that** the transformation of the starting element coordinate system to the axis-fixed W-coordinate system for computing the coordinates of the development of starting element K (intersection circle) on the surface of the sphere consists of a large number of single transformations between Cartesian coordinate systems.

6. Method according to claim 5, **characterised in that** the first transformation is a displacement of the coordinate system origin from the centre point of starting element K (intersection circle) to the centre point of the sphere.

7. Method according to one of the previous claims, **characterised in that** all transformations apart from the first transformation are rotations around an axis.

8. Method according to one of the previous claims, **characterised in that** starting element K is an intersection circle of the sphere and that in step c) a vector (tangential vector) is formed between a centre point before and a centre point after the current centre point of the rolling intersection circle K, which stands vertically (90°) on a vector (alpha vector) between the centre point of the circle and the contact point of intersection circle K.

9. Method according to one of the previous claims, **characterised in that** the computed values of the surface geometry of component B and component W are used to control a machine tool.

10. Method according to one of claims 1 to 9, **characterised in that** the method can be used for the systematic optimisation and classification of machines with geometrically-predetermined spherical component pairs.

**Revendications**

1. Procédé pour produire de manière assistée par ordinateur une machine présentant des couples de composants sphériques à géométrie déterminée

   - avec un composant W présentant des cavités et un composant B présentant des élévations, le composant W présentant un système de coordonnées W lié au corps et un axe du système de coordonnées W coïncidant avec un axe de rotation A2 du composant W, le composant B présentant un système de coordonnées B lié au corps et un axe du système de coordonnées B coïncidant avec un axe de rotation A1 du composant B,
   - avec un angle d'axes $\Phi$ constant entre les axes de rotation A1 et A2,
   - avec un nombre fixe d'élévations zb du composant B et un nombre fixe de cavités zw du composant W, le nombre des cavités zw étant supérieur ou inférieur d'un au nombre des élévations zb,

- avec un angle de rotation θ du composant B et un angle de rotation η du composant W, entre lesquels on a un rapport d'angle de rotation i (i = η/θ = zb/zw) et
- avec un modèle de coque sphérique pour la description mathématique de la géométrie des surfaces incurvées qui résultent des cavités et élévations du composant W et du composant B, qui comprend au moins une sphère avec le rayon R, et un élément de départ K, de préférence un cercle de coupe de la sphère avec un rayon r,

**caractérisé par** les étapes de procédé suivantes :

a) calcul des coordonnées des points situés sur la sphère de l'élément de départ K (cercle de coupe) dans un premier système de coordonnées fine par rapport à l'élément de départ K;
b) calcul des coordonnées de l'élément de départ K (cercle de coupe) dans le système de coordonnées de W grâce à au moins une transformation du système de coordonnées fixe de l'élément de départ K ;
c) génération de l'élément de départ K (cercle de coupe) sur la surface de la sphère afin de déterminer la géométrie complexe du composant W dans le système de coordonnées de W ;
d) retransformation des points obtenus du composant W dans le système de coordonnées de B par rotation simultanée des composants B et W, afin de déterminer une enveloppante des points avec les valeurs d'élévation minimales au-dessus d'un plan du système de coordonnées B, par lequel la surface incurvée du composant B est définie.

2. Procédé selon la revendication 1, **caractérisé en ce que** plusieurs coques sphériques (coordonnées) pour la géométrie complexe (surfaces incurvées) du composant W et du composant B sont calculées en faisant varier le rayon de la sphère R.

3. Procédé selon la revendication 2, **caractérisé en ce que** chaque coque sphérique de rayon R est tournée avec un angle de rotation δ autour de l'axe de rotation de A1 par rapport à la coque sphérique précédente.

4. Procédé selon l'une quelconque des revendications précédentes, **caractérisé en ce que** le système de coordonnées de l'élément de départ, le système de coordonnées de W et le système de coordonnées de B sont des systèmes de coordonnées cartésiens orientés à droite.

5. Procédé selon l'une quelconque des revendications précédentes, **caractérisé en ce que** la transformation du système de coordonnées de l'élément de départ en système de coordonnées de W fixe sur l'axe pour le calcul des coordonnées du développement de l'élément de départ K (cercle de coupe) sur la surface sphérique comprend un grand nombre de transformations individuelles entre des systèmes de coordonnées cartésiens.

6. Procédé selon la revendication 5, **caractérisé en ce que** la première transformation est un déplacement de l'origine du système de coordonnées du centre de l'élément de départ K (cercle de coupe) au centre de la sphère.

7. Procédé selon l'une quelconque des revendications précédentes, **caractérisé en ce que** toutes les transformations, à l'exception de la première transformation, sont des rotations autour d'un axe.

8. Procédé selon l'une quelconque des revendications précédentes, **caractérisé en ce que** l'élément de départ K est un cercle de coupe de la sphère et **en ce que**, lors de l'étape de procédé c), il se forme un vecteur (vecteur de tangente) entre un centre disposé avant le centre actuel et un centre disposé après le centre actuel du cercle de coupe K qui se génère, lequel vecteur est perpendiculaire (90°) à un vecteur (vecteur alpha) entre le centre du cercle et le point de contact du cercle de coupe K.

9. Procédé selon l'une quelconque des revendications précédentes, **caractérisé en ce que** les valeurs calculées de la géométrie de surface du composant B et du composant W sont utilisées pour la commande d'une machine-outil.

10. Procédé selon l'une quelconque des revendications 1 à 9, **caractérisé en ce que** le procédé peut être utilisé pour l'optimisation systématique et la classification de machines avec des couples de composants sphériques et à géométrie déterminée.

Modell-Daten:

Berge:      4
Wellen:     3

Elemente:   72
Schalen:    2
Aussenradius:           $R\_out = 100mm$
Innenradius:            $R\_in = 20mm$
Bergspitzenradius:      $r = 25 \times \frac{R}{R\_out}[mm]$
Achsenwinkel:           $\Phi = 0.2[Radiants]$
Erhebungswinkel:        $\gamma = 0.2[Radiants]$
Verdrehungswinkel:      $\delta = 0$

Fig. 1

**Modell-Daten:**

Berge:    4

Wellen:    3
Elemente:    72

Schalen:    5

Aussenradius:    $R\_out = 100mm$

Innenradius:    $R\_in = 20mm$

Bergspitzenradius:    $r = -6.666667 + 50 \times \frac{R}{R\_out} - 33.333333 \times \frac{R}{R\_out}^2 [mm]$

Achsenwinkel:    $\Phi = 0.2 [Radiants]$

Erhebungswinkel:    $\gamma = 0.2 [Radiants]$

Verdrehungswinkel:    $\delta = 0 [Radiants]$

Fig. 2

**Modell-Daten:**

Berge: 4
Wellen: 3
Elemente: 72
Schalen: 5

Aussenradius: $R\_out = 100mm$

Innenradius: $R\_in = 20mm$

Bergspitzenradius: $r = 10 \times \frac{R}{R\_out}[mm]$

Achsenwinkel: $\Phi = 0.2[Radiants]$

Erhebungswinkel: $\gamma = -0.1 \div 1.7 \times \frac{R}{R\_out} - 1 * \times \frac{R}{R\_out}^2[mm]$

Verdrehungswinkel: $\delta = 0[Radiants]$

**Fig. 3**

Modell-Daten:

Berge:        4
Wellen:       3
Elemente:     72
Schalen:      10
Aussenradius:        $R\_out = 100mm$
Innenradius:         $R\_in = 20mm$
Bergspitzenradius:   $\tau = 10 \times \frac{R}{R\_out}[mm]$
Achsenwinkel:        $\Phi = 0.2[Radiants]$
Erhebungswinkel:     $\gamma = 0.2[Radiants]$
Verdrehungswinkel:   $\delta = 0.2 + 1 \times \frac{R}{R\_out}[Radiants]$

Fig. 4

Fig. 5

Fig. 6